# EUROPEAN PATENT SPECIFICATION

(11) **EP 1 584 895 B1**
(45) Date of publication and mention of the grant of the patent: **27.02.2013**
(21) Application number: 05006067.2
(22) Date of filing: 19.03.2005
(51) Int. Cl.: G01C 11/04, G01C 15/00

(54) **Survey data processing system**
Vermessungs-Datenverarbeitungssystem
Système de traitement de données géodésiques

(30) Priority: 29.03.2004 JP 2004094923
(43) Date of publication of application: 12.10.2005
(73) Proprietor: Kabushiki Kaisha TOPCON, Tokyo (JP)
(72) Inventor: Ohtomo, Fumio, Itabashi-ku Tokyo-to (JP); Otani, Hitoshi, Itabashi-ku Tokyo-to (JP); Omori, Makoto, Itabashi-ku Tokyo-to (JP)
(74) Representative: Louis Pöhlau Lohrentz

(56) References cited:
- EP-A- 1 347 267
- Y. SASAKI, M. NAKAGAWA, R. SHIBASAKI: "Automation and application of texture mapping for 3D modeling of the world heritage"[Online] 3 June 2003 (2003-06-03), XP002333406 Retrieved from the Internet: URL:http://shiba.iis.u-tokyo.ac.jp/labsemi 2003/030603_m2_sasaki.pdf> [retrieved on 2005-06-22]
- S. ERVIN AND H. HASBROUCK: "Draping an image map" LANDSCAPE MODELING, [Online] 2001, pages 92-94, XP002333407 MCGRAW-HILL Retrieved from the Internet: URL:http://www.landscapemodeling.org/html/ tutorials/Draped_Image.pdf> [retrieved on 2005-06-22]
- GRAF K CH ET AL: "Perspective terrain visualization--a fusion of remote sensing, GIS, and computer graphics" COMPUTERS AND GRAPHICS, PERGAMON PRESS LTD. OXFORD, GB, vol. 18, no. 6, November 1994 (1994-11), pages 795-802, XP004014017 ISSN: 0097-8493

## Description

### BACKGROUND OF THE INVENTION

The present invention relates to a surveying system for surveying a predetermined range and for acquiring an image in the predetermined range and a survey data processing system for integrating survey data with an image taken. The invention also relates to a storage medium where an electronic map obtained through data processing is recorded, and also to an electronic map display system for calculating the survey data at an arbitrary point from the electronic map and for restoring a 3-dimensional figure from the electronic map stored in the storage medium and for displaying the restored figure.

With the advance of high-density integration and the speed-up of CPU, memory, etc., or with the development of an electronic device represented by a personal computer, a surveying system has been highly automated in recent years, and it is now possible to process a large amount of survey data.

A system has also been developed, by which it is possible to visually observe map data as in the case of a car navigator.

As a method for visually observing survey data as known in the past, general features of buildings and topography within a survey range are drawn in figures based on survey data and are graphically displayed. Or, a planar map is displayed and the map has image data processed from a picture independently taken with respect to a principal portion of the map. When the principal portion is designated in the planar map, the image of the designated portion is displayed, or the like.

The publication "Automation and application of texture mapping for 3D modelling of the world heritage" by Y. Sasaki et al. (http://www.docstoc.com/docs/50622516/AUTOMATION-AND-APPLICATION-OF-TEXTURE-MAPPING-FOR-3D-MODELING) describes a method for a three dimensional automatic reconstruction of targets having a complex shape, e.g. buildings. Data sets of the target are acquired with a laser scanner, together with CCD images taken by a digital camera. By acquiring laser data and images at several points around the circumference of the target a detailed three dimensional model of the target is obtained.

In the method for visually observing the survey data as described above, general features of buildings and topography are drawn in figures, and an image is displayed only in limited portion in the planar map. Thus, the scenes actually recognized by the user is quite different from the images displayed and survey data. Accordingly, it was difficult for the users to visually connect the actual scene recognized by the user with the displayed image and the survey data.

### SUMMARY OF THE INVENTION

It is an object of the present invention to provide a system, by which it is possible to reduce the difference between the scene as actually recognized by the user and the image or the survey data displayed and by which the user can intuitively recognize the survey data from the displayed image.

To attain the above object, the present invention provides a survey data processing system as claimed in claim 1, which comprises processing programs for preparing 3-dimensional data at three or more points including a control point in a predetermined range by a surveying instrument, for preparing a digital image in a predetermined range including the control point taken by an image pickup device, for preparing TIN data obtained by connecting three or more points including the control point, for matching the control point on the TIN data with the control point on the image, for associating the image with a triangular net which composes the TIN data by texture mapping based on the matching, for displaying the image obtained by superimposing the pickup image taken by said image pickup device to said TIN data by texture mapping, characterized in that, with the progress of civil engineering work, work execution data obtained through the execution of the work are sequentially recorded and accumulated and these are acquired, that said system compares work execution data with working data which comprises said TIN data having at least 3-dimensional data of intersections and an image data superimposable with said TIN data, and that the result of the comparison is displayed with different colors depending on different types of working operation. Also, the present invention provides the survey data processing system as described above, wherein the surveying instrument for obtaining the 3-dimensional data, the image pickup device to obtain the digital image, and the processing program are integrated with each other, and there is provided a display unit. Further, the present invention provides the survey data processing system as described above, wherein the system comprising a surveying instrument for surveying a control point set up in a predetermined measurement range and for automatically measuring the measurement range, an image pickup device for taking at least an image of the measurement range including the control point, and a data processing device for preparing TIN data in triangular net of the measurement range based on the control point and measuring points measured automatically, for superimposing the pickup image taken by the image pickup device to the TIN data by texture mapping using the control point as a reference and for preparing an ortho-image based on the TIN data, characterized in that, with the progress of civil engineering work, work execution data obtained through the execution of the work are sequentially recorded and accumulated and these are acquired, that said system compares work execution data with working data which comprises said TIN data having at least 3-dimensional data of intersections and an image data superimposable with said TIN data, and that the result of the comparison is displayed with different colors depending on different types of working operation. Also, the present invention provides the survey data processing system as described above, wherein the TIN data includes at least 3-dimensional data of each control point and 3-dimensional data of the measuring point, and the data processing device calculates 3-dimensional data at an arbitrary point on the ortho-image from a coordinate calculating equation of a triangular plane formed by three points of the control point and the measuring points. Further, the present invention provides the survey data processing system as described above, wherein the ortho-image from an arbitrary position is prepared based on the TIN data and the pickup image. Also, the present invention provides the survey data processing system as described above, wherein a 3-dimensional image with a projection center at an arbitrary position is prepared based on the TIN data and the pickup image. Further, the present invention provide the survey data processing system as described above, wherein the system compares work execution data with working data which comprises the TIN data having at least 3-dimensional data of intersections and an image data superimposable with the TIN data, and the result of the comparison is displayed with different colors depending on different types of working operation.

It may be provided a storage medium, which comprises working data recorded in the storage medium, wherein the working data comprises at least TIN data having 3-dimensional data of intersections and image data superimposable on the TIN data.

It may be provided a display device, which comprises at least a display unit, an arithmetic operation control unit, and a storage unit having an image reproducing program, wherein the arithmetic operation control unit can display a superimposed image of TIN data with the image data on the display unit based on working data which comprises at least TIN data having 3-dimensional data at intersections and image data superimposable on the TIN data. Further, the present invention provides the display device, wherein the arithmetic operation control unit prepares a 3-dimensional image having an arbitrary position in the superimposed image as a projection center based on the working data by using the image reproducing program and displays the 3-dimensional image on the display unit.

It may be provided a survey data processing system that comprises a surveying instrument for surveying a control point set up in a predetermined measurement range and for automatically measuring the measurement range, an image pickup device for taking at least an image of the measurement range including the control point, and a data processing device for preparing TIN data in triangular net of the measurement range based on the control point and measuring points measured automatically, for superimposing the pickup image taken by the image pickup device to the TIN data by texture mapping using the control point as a reference and for preparing an ortho-image based on the TIN data. As a result, the superimposed data include image data in the measurement range and the survey data in the measurement range, and it is possible to obtain the survey data at an arbitrary point in the image.

It may be provided in a survey data processing system, that the TIN data includes at least 3-dimensional data of each control point and 3-dimensional data of the measuring point, and that the data processing device calculates 3-dimensional data at an arbitrary point on the ortho-image from a coordinate calculating equation of a triangular plane formed by three points of the control point and the measuring points. Accordingly, it is possible to visually identify an arbitrary point and to acquire survey data at the arbitrary point.

Further, it may be provided in the survey data processing system as described above, a 3-dimensional image with a projection center at an arbitrary position is prepared based on the TIN data and the pickup image. Therefore, the survey data can be visually identified.

It may be provided a storage medium that comprises working data recorded in the storage medium, and the working data comprises at least TIN data having 3-dimensional data of intersections and image data superimposable on the TIN data. As a result, the use of the working data can be generalized, and it is easier to handle.

It may be provided a display unit that comprises at least a display unit, an arithmetic operation control unit, and a storage unit having an image reproducing program, wherein the arithmetic operation control unit can display a superimposed image of TIN data with the image data on the display unit based on working data which comprises at least TIN data having 3-dimensional data at intersections and image data superimposable on the TIN data. Also, the present invention provides a display device, wherein the arithmetic operation control unit prepares a 3-dimensional image having an arbitrary position in the superimposed image as a projection center based on the working data by using the image reproducing program and displays the 3-dimensional image on the display unit. Thus, the use of the working data is generalized, and the survey data can be recognized together with the image. From the viewpoint of the user, 3-dimensional image is displayed, and this contributes to the improvement of visual observation.

### BRIEF DESCRIPTION OF THE DRAWINGS

Fig. 1 is a schematical block diagram of an embodiment of the present invention;
Fig. 2 is a schematical block diagram of a surveying instrument according to the embodiment of the invention;
Fig. 3 is a schematical block diagram of a data processing device of the present embodiment;
Fig. 4 is a schematical block diagram of a display device of the present embodiment;
Fig. 5 is a drawing to show relation between a pickup image and an ortho-image;
Fig. 6 is a drawing to explain relation between a measurement range and a surveying instrument and an image pickup device of the present embodiment;
Fig. 7 is a drawing to explain image processing of TIN data, a pickup image, and an ortho-image;
Fig. 8 is a flow chart to explain data processing in a survey data processing system; and
Fig. 9 is a drawing of an example where finishing data is superimposed on civil engineering work data.

### DETAILED DESCRIPTION OF THE PREFERRED EMBODIMENT

Description will be given below on the best mode of the present invention to carry out the invention referring to the drawings.

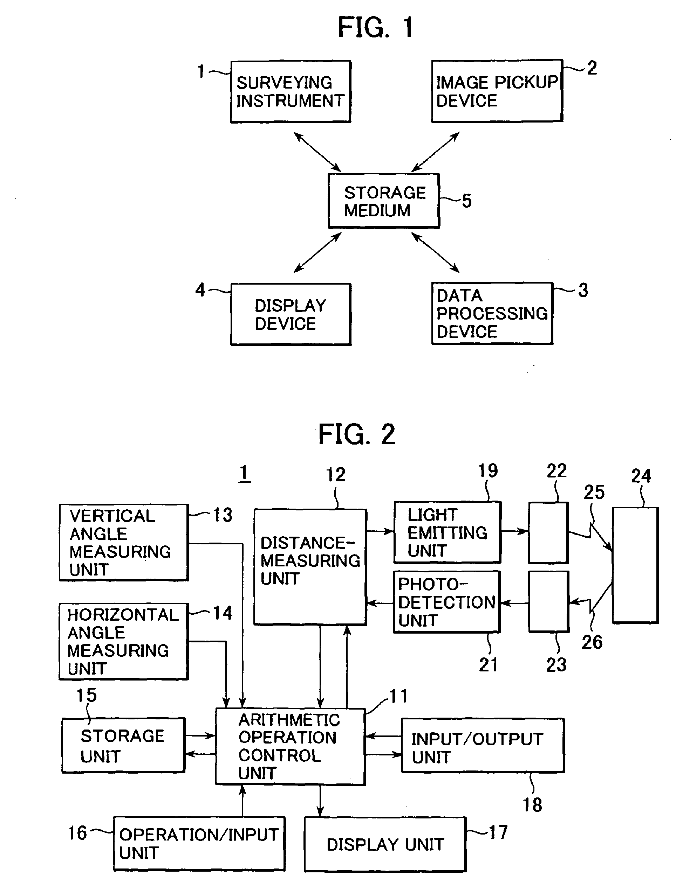

Referring to Fig. 1, description will be given now on general constructions of a survey data processing system according to the present invention.

The survey data processing system primarily comprises a surveying instrument 1, e.g. a total station (TS), for measuring a distance and for measuring a horizontal angle and an up-to-down angle (a vertical angle). An image pickup device 2 such as a digital camera, a data processing device 3 such as a personal computer, a data display device 4, and a storage medium 5 such as magnetic storage medium, semiconductor storage medium, optical storage medium, etc.

The surveying instrument 1 is used to perform surveying operation such as distance measurement and angle measurement for a predetermined range. The survey data is recorded on the storage medium 5. Then, the survey data of the storage medium 5 is inputted to the data processing device 3. The image pickup device 2 picks up an image in the surveying range, and an image data (digital data) is recorded on the storage medium 5. The image data recorded on the storage medium 5 is inputted to the data processing device 3. The data processing device 3 synthesizes the image data with the survey data and processes the data to the image data accompanied with the survey data, and this is recorded in the storage medium 5. Based on the data recorded in the storage medium 5, the display device 4 displays the image data with the survey data.

A user can display the image as a 3-dimensional image or can pick up the survey data relating to an arbitrary position in the image.

More concrete description will be given below.

Fig. 2 shows an example of the surveying instrument 1 used in the present embodiment.

In Fig. 2, reference numeral 11 denotes a control arithmetic operation unit. A distance-measuring unit 12, a vertical angle measuring unit 13, a horizontal angle measuring unit 14, a storage unit 15, an operation/input unit 16, a display unit 17, and input/output unit 18 are electrically connected to the control arithmetic operation unit 11.

The distance-measuring unit 12 comprises a light emitter 19 and a photodetector 21. From the light emitter 19, a distance-measuring light 25 is projected to an object to be measured (target) 24 via a projection optical system 22. A distance-measuring reflection light 26 reflected by the object to be measured 24 is received by the photodetector 21 via a photodetection optical system 23. Based on a photodetection signal emitted from the photodetector 21, a distance to the object to be measured 24 is measured. At least the light emitter 19, the photodetector 21, the projection optical system 22, and the photodetection optical system 23 are rotatably supported so as to be rotated in horizontal and vertical directions. The horizontal angle and the vertical angle are measured by the vertical angle measuring unit 13 and the horizontal angle measuring unit 14 respectively, and the results of measurement are inputted to the control arithmetic operation unit 11.

The storage unit 15 comprises a program storage unit (not shown in the figure) for storing sequence program and operation program necessary for measuring distance and angle and a data storage unit (not shown in the figure) for storing distance-measuring data and angle-measuring data. From the operation/input unit 16, conditions for starting distance measurement, a command to start distance measurement etc. are inputted. Measuring conditions, progress of measurement, measurement results, etc. are displayed on the display unit 17.

The input/output unit 18 controls connection with external devices and also controls transmitting and receiving of signals to and from external devices. For instance, data is written to the storage medium 5 or data recorded on the storage medium 5 is read out.

The image pickup device 2 is a device such as a digital camera. An image picked up is turned to a digital signal and is recorded on the storage medium 5 such as a memory card, or the signal can be outputted to outside.

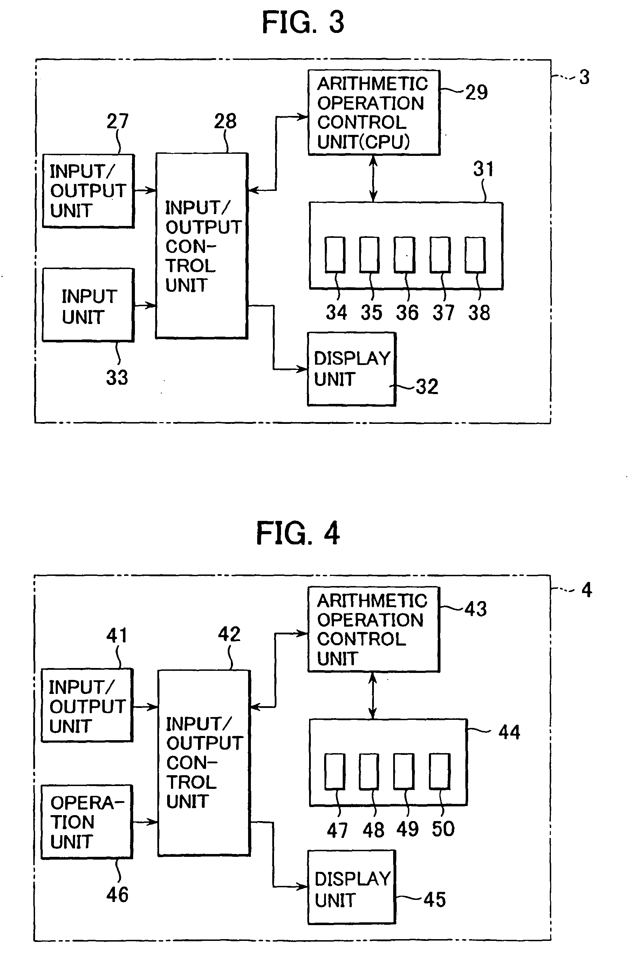

As shown in Fig. 3, the data processing device 3 comprises an input/output unit 27, an input/output control unit 28, an arithmetic operation control unit (CPU) 29, a storage unit 31 such as a hard disk, a display unit 32 such as a liquid crystal display, and an input unit 33 such as a keyboard.

The input/output unit 27 reads the data recorded on the storage medium 5 and writes the data to the storage medium 5. The data is given and taken to and from the arithmetic operation control unit 29 via the input/output control unit 28.

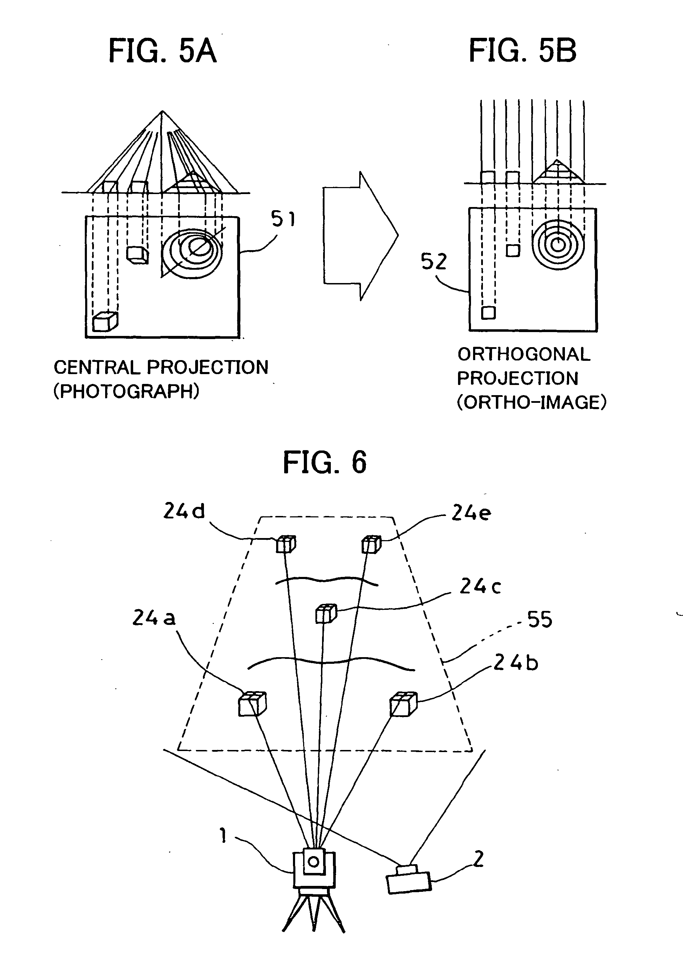

In the storage unit 31, there are stored an image processing unit 34, a data processing program 35, a survey data calculating program 36 and an image reproducing program 37, etc. Also, the storage unit 31 has a data storage unit 38. The image processing program 34 superimposes TIN data on the pickup image and performs image processing such as conversion from the pickup image which is superimposed with TIN data (one point transmission image) (See Fig.5) to an orthogonal projection image (ortho-image) or conversion from an ortho-image to a one-point transmission image. The data processing program 35 performs data processing such as texture mapping of an image data to a survey data. The survey data calculating program 36 obtains survey data at an arbitrary point on the image from the data synthesized with the image data and the survey data through interpolation of mesh data. The image reproducing program 37 calculates an image as seen from an arbitrary direction. Also, the data storage unit 38 stores the data such as data from the input/output control unit 28, computation data calculated at the arithmetic operation control unit 29, etc.

Various types of programs as described above are started by an input from the input unit 33, and arithmetic operation is performed. For instance, an image produced by texture mapping of the image data on the survey data is displayed on the display unit 32. When an arbitrary point is designated in the image, the survey data calculating program 36 is started. Positional data, elevation, tilting, etc. of the designated point are calculated and displayed.

As shown in Fig. 4, the display device 4 comprises an input/output unit 41, an input/output control unit 42, an arithmetic operation control unit (CPU) 43, a storage unit 44 such as a hard disk, a display unit 45 such as a liquid crystal display unit, and an operation unit 46 such as a keyboard.

The input/output unit 41 reads the data recorded on the storage medium 5, and the data is transmitted to the arithmetic operation control unit 43 via the input/output control unit 42. The storage unit 44 has a data storage unit 47. Also, in the storage unit 44, there are stored an image processing program 48, a survey data calculating program 49, an image reproducing program 50, etc. The data storage unit 47 temporarily stores the data as read from the storage medium 5. The image processing program 48 performs image processing such as conversion from a pickup image 51 which is superimposed with TIN data (one-point transmission image) (See Fig. 5 (A)) to an orthogonal projection image 52 (ortho-image) (See Fig. 5 (B)) or conversion from an ortho-image to an one-point transmission image. The survey data calculating program 49 calculates the survey data at an arbitrary point on the image from the data synthesized with the image data and the survey data. The image reproducing program 50 calculates an image as seen from an arbitrary direction.

The above programs are started by an input from the operation unit 46. For instance, an image after receiving data processing is displayed on the display unit 45. When an arbitrary point is designated in the image, the survey data calculating program 49 is started. Then, data such as positional data, elevation, tilting, etc. of the designated point are computed and displayed. Or when a direction of visual line is designated with respect to the image, a 3-dimensional image as seen from the direction of visual line is displayed on the display unit 45.

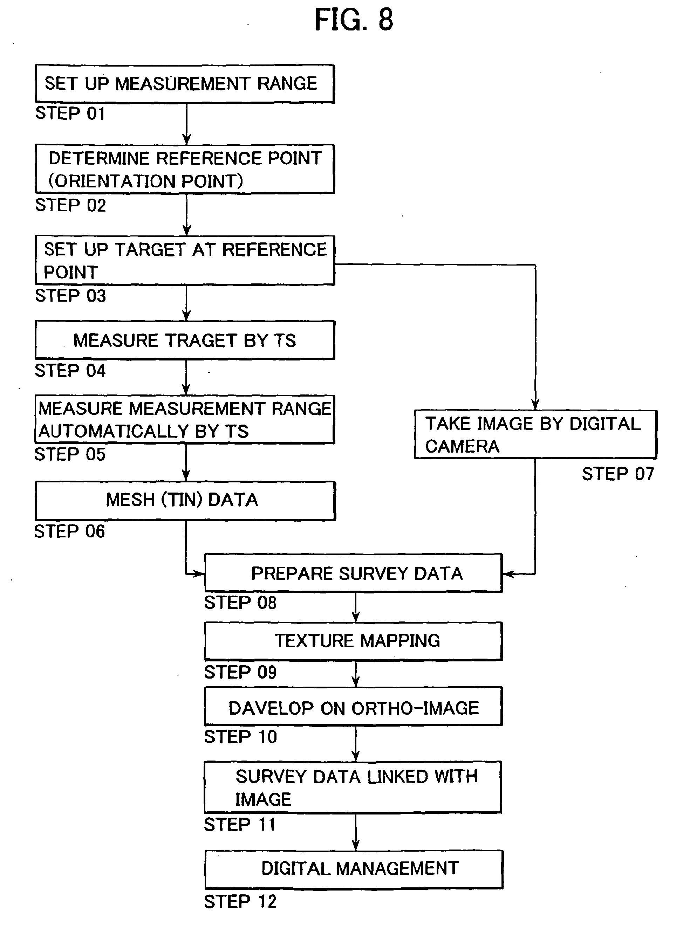

Now, description will be given on the preparation of an electronic map in the above described survey data processing system referring to Fig. 8.

First, a measurement range 55 is set up, on which surveying operation is carried out by using the surveying instrument (TS) 1 (Step 01), and reference points (a control points) are determined within the measurement range 55 (Step 02). Targets 24a, 24b, 24c, 24d and 24e are set up at the reference points (Step 03), and measurement is made on the targets 24a, 24b, 24c, 24d and 24e by using the surveying instrument 1 (Step 04) (See Fig. 6).

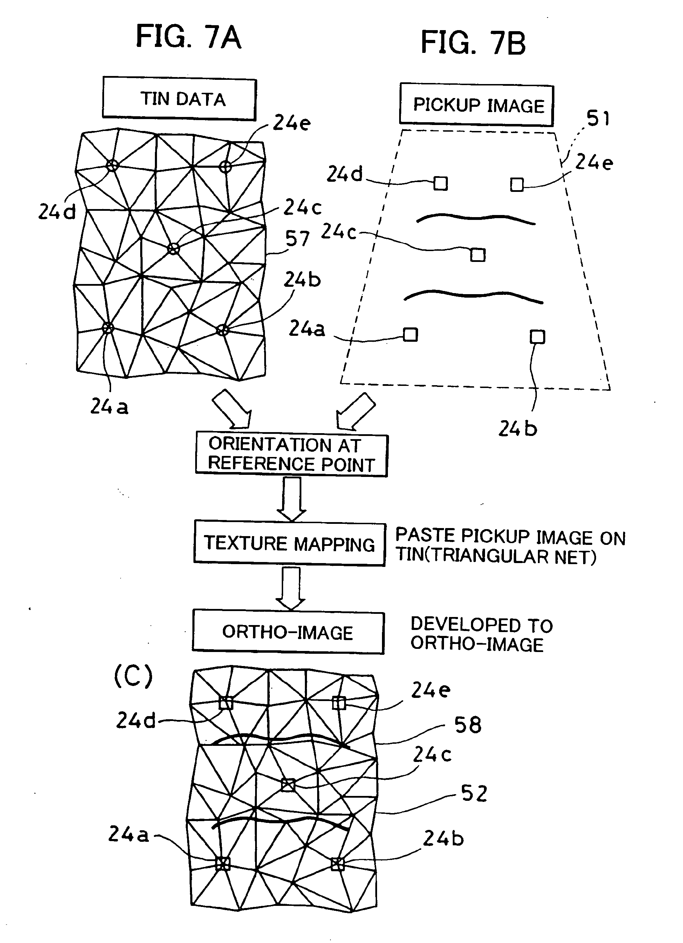

Further, measuring points (See Fig. 7; in the figure, each of the intersections represents a measuring point) are automatically measured at predetermined spacing within the measurement range 55 (Step 05).

The data at the measuring points, the data of distance measurement, horizontal angles and vertical angles as measured, are recorded on the storage medium 5 via the input/output unit 18. The measurement data can be inputted to the data processing device 3 via the storage medium 5.

The storage medium 5 is taken out of the surveying instrument 1, and the storage medium 5 is loaded in the input/output unit 27 of the data processing device 3. Survey data in the storage medium 5 is read out, and the survey data is stored in the data storage unit 38 as working data.

The data processing program 35 is started. The survey data are connected with each other with the measuring points as vertexes and the survey data are converted to TIN data 57, which represents a collection of triangular planes turned to TIN (triangular indefinite net) (See Fig. 7 (A)) (Step 06). When the measuring points measured by the surveying instrument 1 are shown on coordinates, positions indicated by the measuring points are equivalent with the positions displayed in the orthogonal projection image.

Each of the measuring points as described above has 3-dimensional data of planar position and height. A coordinate calculating equation representing a triangular plane with three measuring points as vertexes can be calculated based on 3-dimensional data of the three measuring points, and 3-dimensional data of any point within the triangular plane can be calculated from the coordinate calculating equation. The coordinate calculating equation is described, for instance, in JP-A-2004163292.

By obtaining the coordinate calculating equation on all triangular planes, which are turned to TIN, it is possible to find 3-dimensional data at an arbitrary point within the measurement range through interpolation.

The TIN data 57 and the coordinate calculating equation indicating triangular planes (hereinafter referred as "mesh") are stored in the data storage unit 38 together with the survey data as working data.

Under the condition that the control points are set up, image pickup is performed by the image pickup device 2 so that the measurement range 55 is included, and a pickup image 51 is obtained (Step 07). Therefore, the control points are shown in the pickup image 51. It is preferable that the pickup image 51 is an aerial photograph or a photograph as taken from a direction of visual line of an ordinary person. When the pickup image 51 is acquired from two or more directions, it is possible to compensate the image data lacked by occlusion.

The pickup image 51 is outputted as a digital image data, and the image data is recorded in the storage medium 5. The storage medium 5 is taken out of the image pickup device 2 and is loaded to the data processing device 3. The image data is inputted to the data processing device 3 via the storage medium 5.

When the storage medium 5 is loaded to the input/output unit 27 of the data processing device 3, the image data in the storage medium 5 is read out and is stored in the data storage unit 38.

The image processing program 35 is started. The reference point (control point) measured by the surveying instrument 1 is matched to the control point on the pickup image. Based on the result, texture mapping is performed on the image corresponding to each TIN (triangular net), and a survey data superimposed with the image is prepared. The ortho-image is developed based on the survey data texturally mapped (Step 09 and Step 10). In this case, the image is expanded or reduced in size in response to expansion or reduction of TIN. The pickup image 51 thus converted corresponds to the point in the figure of TIN data 57 on a 1:1 basis (See Fig. 7).

When an arbitrary point in the superimposed image 58 is designated, a mesh, to which the arbitrary point belongs, is specified. By the coordinate calculating equation of the mesh, 3-dimensional data as seen from an arbitrary position can be calculated. That is, the superimposed image 58 is an image including 3-dimensinal data.

In the data storage unit 38, the TIN data 57 and the pickup image 51 may be linked to each other for each measurement range or for each mesh within the measurement range. For linking, the TIN data 57 and the pickup image 51 may be stored in different storage areas and may be linked to each other by management data. Or, different areas may be allotted for each mesh, and the data relating to one mesh of the TIN data 57 and an image data corresponding to one mesh in the pickup image 51 may be stored in different storage areas respectively (Step 11).

The superimposed image 58 itself can be displayed on the display unit 32. By indicating an arbitrary position on the display screen, it is possible to display 3-dimensional data for the arbitrary position, i.e. the survey data. Further, as described above, the working data include the image data and the 3-dimensional data. When the image reproducing program 37 is started and a predetermined position in the working data is set, an ortho-image as seen from the predetermined position can be calculated. Further, when the ortho-image is inversely converted to a central projection image (pickup image) having the predetermined position as the center, a 3-dimensional image can be calculated, and the 3-dimensional image can be displayed on the display unit 32.

In Step 12, by writing the data associated each other (working data) to the storage medium 5, the working data can be utilized in the display device 4. That is, the storage medium 5 can be utilized as electronic working data.

The storage medium 5 is taken out of the data processing device 3, and the storage medium 5 is loaded to the input/output unit 41 of the display device 4. The input/output unit 41 reads out the working data from the storage medium 5. By starting the image processing program 48, the survey data calculating program 49, and the image reproducing program 50, a superimposed image 58 can be displayed on the display unit 45. Also, the survey data at an arbitrary point in the superimposed image 58 can be calculated and displayed.

Further, as described above, it is possible to calculate a 3-dimensional image from an arbitrary point, and the 3-dimensional image can be displayed on the display unit 45.

If the display device 4 is used as in the case of a car navigator and if the present position of the display device 4 is inputted by using a GPS position measuring system, a 3-dimensional image with the present position as a visual point (center of projection) can be displayed on the display unit 45. Thus, the 3-dimensional image with the present position as a visual point can be displayed at real time.

When the image processing program 48, the survey data calculating program 49, and the image reproducing program 50 are stored in the storage unit 15 of the surveying instrument 1, by loading the storage medium 5 where the working data (electronic map) recorded to the input/output unit 18, it is possible to display the superimposed image 58 and the 3-dimensional image on the display unit 17 of the surveying instrument 1. By storing programs similar to the programs in the storage unit 31 to the storage unit 15 of the surveying instrument 1, it is possible to prepare the working data by the surveying instrument 1 itself.

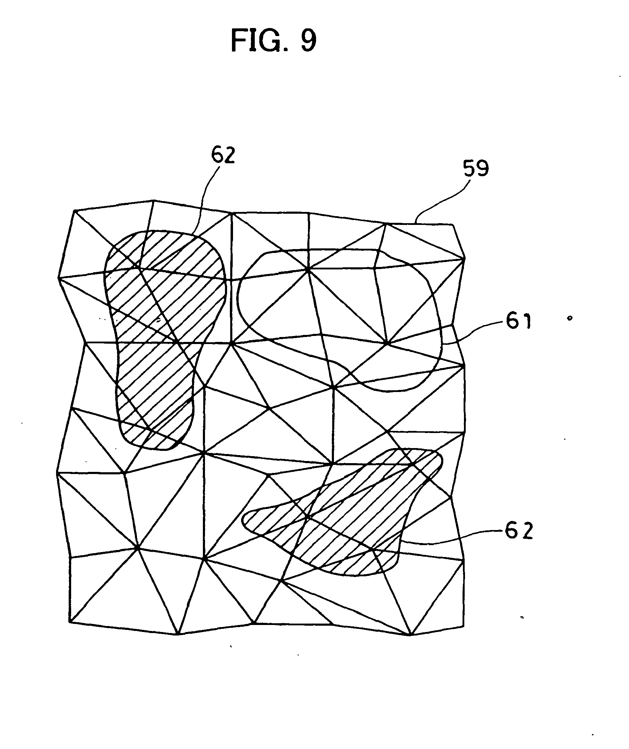

Next, by referring to Fig. 9, description will be given on a case where civil engineering work is carried out based on TIN data obtained by the process to turn to TIN (3-dimensional data, i.e. survey data) or based on the working data where the image data is synthesized with the survey data.

With the progress of civil engineering work, work execution data obtained through the execution of the work are sequentially recorded and accumulated, and these are acquired as finishing data.

The finishing data of the civil engineering work are compared with the working data, and the results of the comparison are displayed on the display device 4. Fig. 9 represents an executed work image 59 where a poorly worked portion or an unworked portion through the comparison results are displayed. By comparing and calculating the finishing data and the working data, it is possible to identify whether corrective working for the poorly worked portion or the unworked portion is excavation work or soil filling work. On the image, an operator can recognize the type of work, i.e. whether it is excavation work or soil filling work, or the operator can identify the working range.

As one of the method for displaying the working data, the working range is indicated and it is together displayed whether the working range is excavation work or soil filling work. For instance, an excavation range 61 and a soil filling range 62 can be displayed with different colors to facilitate visual recognition, or the like.

In the above, the data are given and taken to and from the surveying instrument 1, the image pickup device 2, the data processing device 3, and the display device 4 via the storage medium 5. The data may be given and taken via a cable by connecting a cable or via communication means such as wireless LAN. Further, when a large amount of data is to be processed, a data collector having a storage system with large capacity such as HDD may be used instead of the storage medium 5.

## Claims

1. A survey data processing system, comprising means adapted to store and execute processing programs
(p1) for preparing a 3-dimensional data at three or more points including a control point in a predetermined range by a surveying instrument (1),
(p2) for preparing a digital image (51) in a predetermined range including the control point taken by an image pickup device (2),
(p3) for preparing TIN data (57) obtained by connecting three or more points including the control point,
(p4) for matching the control point on said TIN data (57) with the control point on said image,
(p5) for associating said image with a triangular net which composes said TIN data (57) by texture mapping based on the matching, and
(p6) for displaying the image obtained by superimposing the pickup image (51) taken by said image pickup device (2) to said TIN data (57) by texture mapping,
**characterized in that** the system is adapted such
(a) that with the progress of civil engineering work, the system is capable of sequentially recording, accumulating and acquiring work execution data obtained through the execution of the work
(b) that said system is capable of comparing work execution data with working data which comprises said TIN data (57) having at least 3-dimensional data of intersections and an image data superimposable with said TIN data (57), and
(c) that the system is capable of displaying the result of the comparison with different colors depending on different types of working operation.

2. A survey data processing system according to claim 1,
**characterized in,**
**that** the surveying instrument (1) for obtaining said 3-dimensional data, the image pickup device (2) to obtain the digital image (51), and the processing program are integrated with each other, and there is provided a display unit (4).

3. A survey data processing system, comprising
(q1) a surveying instrument (1)
for surveying a control point set up in a predetermined measurement range and
for automatically measuring the measurement range,
(q2) an image pickup device (2)
for taking at least an image of the measurement range including the control point, and
(q3) a data processing device (3)
for preparing TIN data (57) in triangular net of the measurement range based on the control point and measuring points measured automatically,
for superimposing the pickup image (51) taken by said image pickup device (2) to said TIN data (57) by texture mapping using the control point as a reference and
for preparing an ortho-image (52) based on said TIN data (57),
**characterized in that** the system is adapted such
(a) that with the progress of civil engineering work, the system is capable of sequentially recording, accumulating and acquiring work execution data obtained through the execution of the work.
(b) that said system is capable of comparing work execution data with working data which comprises said TIN data (57) having at least 3-dimensional data of intersections and an image data superimposable with said TIN data (57), and
(c) that the system is capable of displaying the result of the comparison with different colors depending on different types of working operation.

4. A survey data processing system according to claim 3,
**characterized in,**
**that** said TIN data (57) includes at least 3-dimensional data of each control point and 3-dimensional data of the measuring point, and said data processing device (3) is adapted to calculate 3-dimensional data at an arbitrary point on the ortho-image (52) from a coordinate calculating equation of a triangular plane formed by three points of the control point and the measuring points.

5. A survey data processing system according to claim 4,
**characterized in,**
**that** it can prepare the ortho-image (52) from an arbitrary position based on said TIN data (57) and said pickup image (51).

6. A survey data processing system according to claim 4,
**characterized in,**
**that** it can prepare a 3-dimensional image with a projection center at an arbitrary position based on said TIN data (57) and the pickup image (51).

## Patentansprüche

1. Vermessungsdatenverarbeitungssystem, das Mittel umfasst, die geeignet sind, Verarbeitungsprogramme zu speichern und auszuführen:
(p1) zum Herstellen von 3-dimensionalen Daten an drei oder mehr Punkten einschließlich eines Steuerpunktes in einem vorbestimmten Bereich durch ein Vermessungsinstrument (1),
(p2) zum Herstellen eines digitalen Bildes (51), das durch eine Bildaufnahmevorrichtung (2) aufgenommen worden ist, in einem vorbestimmten Bereich einschließlich des Steuerpunktes,
(p3) zum Herstellen von TIN-Daten (57), die durch Verbinden von drei oder mehr Punkten einschließlich des Steuerpunktes erhalten werden,
(p4) zum Abgleichen des Steuerpunktes auf den TIN-Daten (57) mit dem Steuerpunkt auf dem Bild,
(p5) zum Zuordnen des Bildes zu einem Dreiecksnetz, das die TIN-Daten (57) zusammensetzt, durch eine Texturabbildung auf der Basis des Abgleichens, und
(p6) zum Anzeigen des Bildes, das durch ein Übereinanderlegen des aufgenommenen Bildes (51), das durch die Bildaufnahmevorrichtung (2) aufgenommen worden ist, auf die TIN-Daten (57) durch eine Texturabbildung erhalten worden ist,
**dadurch gekennzeichnet, dass** das System so beschaffen ist,
(a) dass das System fähig ist, die Arbeitsausführungsdaten, die entsprechend dem Baufortschritt durch die Ausführung der Arbeit erhalten worden sind, nacheinander aufzuzeichnen, zu akkumulieren und zu erfassen,
(b) dass das System fähig ist, die Arbeitsausführungsdaten mit den Arbeitsdaten, die TIN-Daten (57) mit mindestens 3-dimensionalen Daten von Schnittpunkten und einen Bildpunkt, der mit den TIN-Daten (57) übereinandergelegt werden kann, umfassen, zu vergleichen, und
(c) dass das System fähig ist, das Ergebnis des Vergleichs in Abhängigkeit von verschiedenen Typen der Arbeitsausführung in verschiedenen Farben anzuzeigen.

2. Vermessungsdatenverarbeitungssystem nach Anspruch 1,
**dadurch gekennzeichnet, dass**
das Vermessungsinstrument (1) zum Erhalten von 3-dimensionalen Daten, die Bildaufnahmevorrichtung (2), um das digitale Bild (51) zu erhalten, und das Verarbeitungsprogramm miteinander integriert sind, und eine Anzeigevorrichtung (4) vorgesehen ist.

3. Vermessungsdatenverarbeitungssystem, das umfasst,
(q1) ein Vermessungsinstrument (1)
zum Vermessen einer Steuerpunkteinstellung in einem vorbestimmten Messbereich und
zum automatischen Messen des Messbereiches,
(q2) eine Bildaufnahmevorrichtung (2)
zum Aufnehmen von mindestens einem Bild des Messbereiches, das den Steuerpunkt enthält, und
(q3) eine Datenverarbeitungsvorrichtung (3)
zum Herstellen von TIN-Daten (57) in einem Dreiecksnetz des Messbereiches auf der Basis des Steuerpunktes und der automatisch gemessenen Messpunkte,
zum Übereinanderlegen des aufgenommenen Bildes (51), das durch die Bildaufnahmevorrichtung (2) aufgenommen worden ist, auf die TIN-Daten (57) durch eine Texturabbildung unter Verwendung des Steuerpunktes als eine Referenz und
zum Herstellen eines Orthobildes (52) auf der Basis der TIN-Daten (57),
**dadurch gekennzeichnet, dass** das System so beschaffen ist,
(a) dass das System fähig ist, die Arbeitsausführungsdaten, die entsprechend dem Baufortschritt durch die Ausführung der Arbeit erhalten worden sind, nacheinander aufzuzeichnen, zu akkumulieren und zu erfassen,
(b) dass das System fähig ist, die Arbeitsausführungsdaten mit den Arbeitsdaten, die TIN-Daten (57) mit mindestens 3-dimensionalen Daten von Schnittpunkten und einen Bildpunkt, der mit den TIN-Daten (57) übereinandergelegt werden kann, umfassen, zu vergleichen, und
(c) dass das System fähig ist, das Ergebnis des Vergleichs in Abhängigkeit von verschiedenen Typen der Arbeitsausführung in verschiedenen Farben anzuzeigen.

4. Vermessungsdatenverarbeitungssystem nach Anspruch 3,
**dadurch gekennzeichnet, dass**
die TIN-Daten (57) mindestens 3-dimensionale Daten eines jeden Steuerpunktes und 3-dimensionale Daten des Messpunktes enthalten, und die Datenverarbeitungsvorrichtung (3) geeignet ist, 3-dimensionale Daten an einem willkürlichen Punkt auf dem Orthobild (52) aus einer Gleichung, die eine Koordinate einer Dreiecksebene, die durch drei Punkte des Steuerpunktes und der Messpunkte gebildet ist, berechnet, zu berechnen.

5. Vermessungsdatenverarbeitungssystem nach Anspruch 4,
**dadurch gekennzeichnet, dass**
es das Orthobild (52) aus einer willkürlichen Position auf der Basis der TIN-Daten (57) und des aufgenommenen Bildes (51) herstellen kann.

6. Vermessungsdatenverarbeitungssystem nach Anspruch 4,
**dadurch gekennzeichnet, dass**
es ein 3-dimensionales Bild mit einem Projektionszentrum an einer willkürlichen Position auf der Basis der TIN-Daten (57) und des aufgenommenen Bildes (51) herstellen kann.

## Revendications

1. Système de traitement de données géodésiques, comprenant un moyen apte à stocker et exécuter des programmes de traitement :
(p1) pour préparer des données tridimensionnelles au niveau de trois points ou plus incluant un point de contrôle dans une plage prédéterminée, par un instrument d'arpentage (1) ;
(p2) pour préparer une image numérique (51) dans une plage prédéterminée incluant le point de contrôle sélectionné par un dispositif de capture d'image (2) ;
(p3) pour préparer des données TIN (57) obtenues en reliant trois points ou plus incluant le point de contrôle ;
(p4) pour faire correspondre le point de contrôle sur lesdites données TIN (57) et le point de contrôle sur ladite image ;
(p5) pour associer ladite image avec un maillage triangulaire qui compose lesdites données TIN (57) par le biais d'une mise en concordance de textures basée sur l'étape de correspondance ; et
(p6) pour afficher l'image obtenue en superposant l'image de capture (51) prise par ledit dispositif de capture d'image (2) sur lesdites données TIN (57) par le biais d'une mise en concordance de textures ;
**caractérisé en ce que** le système est adapté
(a) de sorte qu'avec le progrès des travaux de génie civil, le système est apte à enregistrer, accumuler et acquérir, séquentiellement, des données d'exécution de travaux obtenues par l'exécution des travaux ;
(b) de sorte que ledit système est apte à comparer des données d'exécution de travaux à des données de travaux qui comprennent lesdites données TIN (57) présentant au moins des données tridimensionnelles d'intersections et des données d'image superposables auxdites données TIN (57) ; et
(c) de sorte que le système est apte à afficher le résultat de la comparaison avec des couleurs différentes en fonction de différents types d'opération de travail.

2. Système de traitement de données géodésiques selon la revendication 1,
**caractérisé en ce que**
l'instrument d'arpentage (1) destiné à obtenir lesdites données tridimensionnelles, le dispositif de capture d'image (2) destiné à obtenir l'image numérique (51), et le programme de traitement, sont mutuellement intégrés, et une unité d'affichage (4) est fournie.

3. Système de traitement de données géodésiques, comprenant
(q1) un instrument d'arpentage (1)
pour sonder un point de contrôle défini dans une plage de mesures prédéterminée ; et
pour mesurer automatiquement la plage de mesures ;
(q2) un dispositif de capture d'image (2) pour capturer au moins une image de la plage de mesures incluant le point de contrôle ; et
(q3) un dispositif de traitement de données (3)
pour préparer des données TIN (57) dans un maillage triangulaire de la plage de mesures sur la base du point de contrôle et de points de mesure mesurés automatiquement ;
pour superposer l'image de capture (51), capturée par ledit dispositif de capture d'image (2), auxdites données TIN (57) au moyen d'une mise en concordance de textures utilisant le point de contrôle en qualité de référence ; et
pour préparer une ortho-image (52) sur la base desdites données TIN (57) ;
**caractérisé en ce que** le système est adapté :
(a) de sorte qu'avec le progrès des travaux de génie civil, le système est apte à enregistrer, accumuler et acquérir, séquentiellement, des données d'exécution de travaux obtenues par l'exécution des travaux ;
(b) de sorte que ledit système est apte à comparer des données d'exécution de travaux à des données de travaux qui comprennent lesdites données TIN (57) présentant au moins des données tridimensionnelles d'intersections et des données d'image superposables auxdites données TIN (57) ; et
(c) de sorte que le système est apte à afficher le résultat de la comparaison avec des couleurs différentes en fonction de différents types d'opération de travail.

4. Système de traitement de données géodésiques selon la revendication 3,
**caractérisé en ce que**
lesdites données TIN (57) incluent au moins des données tridimensionnelles de chaque point de contrôle et des données tridimensionnelles du point de mesure, et ledit dispositif de traitement de données (3) est apte à calculer des données tridimensionnelles au niveau d'un point arbitraire sur l'ortho-image (52), à partir d'une équation de calcul de coordonnées d'un plan triangulaire formé par trois points du point de contrôle et des points de mesure.

5. Système de traitement de données géodésiques selon la revendication 4,
**caractérisé en ce que**
le système peut préparer l'ortho-image (52) à partir d'une position arbitraire, sur la base desdites données TIN (57) et de ladite image de capture (51).

6. Système de traitement de données géodésiques selon la revendication 4,
**caractérisé en ce que**
le système peut préparer une image tridimensionnelle avec un centre de projection au niveau d'une position arbitraire, sur la base desdites données TIN (57) et de l'image de capture (51).
